# EUROPEAN PATENT SPECIFICATION

(11) **EP 3 867 514 B1**
(45) Date of publication and mention of the grant of the patent: **11.12.2024**
(21) Application number: 19787252.6
(22) Date of filing: 15.10.2019
(51) Int. Cl.: F02D 41/14

(54) **METHOD OF CONTROLLING VEHICLE EMISSIONS**
VERFAHREN ZUR STEUERUNG DER FAHRZEUGEMISSIONEN
PROCÉDÉ DE CONTRÔLE DES ÉMISSIONS DES VÉHICULES

(30) Priority: 19.10.2018 GB 201817030
(43) Date of publication of application: 25.08.2021
(73) Proprietor: PHINIA Delphi Luxembourg SARL, 4367 Belvaux (LU)
(72) Inventor: PARMENTIER, Michael, 6747 CHATILLON (BE); SCHMITT, Julien, 57970 KUNTZIG (FR)
(74) Representative: Office Freylinger
(86) International application number: PCT/EP2019/077899
(87) International publication number: WO 2020/078959

(56) References cited:
- EP-A1- 1 600 830
- GB-A- 2 531 368
- GB-A- 2 548 831
- US-A1- 2016 252 036
- US-A1- 2017 248 091
- US-B1- 6 668 631

## Description

### TECHNICAL FIELD

This application relates to a method of controlling vehicle emissions and has application to both petrol and Diesel engines. It has particular but not exclusive application to engines with Exhaust Gas Recirculation (EGR).

### BACKGROUND OF THE INVENTION

With the introduction of Real Driving Emissions (RDE) for Euro 6d legislation, passenger cars have to fulfil certain emission limits under much wider conditions than in the past. With Euro 6b and earlier legislations, engine manufacturers were requested to comply with emission limits on the mild pseudo-steady-state NEDC cycle. Engine calibration has been mainly focused on this.

In random driving conditions (non cycle), Euro 6d vehicles are therefore much cleaner than earlier legislation versions, especially in regards to NOx emissions of diesel vehicles.

Controlling NOx emissions on RDE requires extensive use of all the available means provided by the engine H/W and after treatment system. However, lowering tailpipe NOx emissions has some associated drawbacks. Firstly on the engine-out side, increased Exhaust Gas Recirculation (EGR) (or, at a lower extent, injection retard) greatly reduce NOx but at the cost of increased particulates and CO2. Secondly on the after-treatment side, some gain in SCR NOx conversion performance can be achieved by thermal management to the cost of CO2 or by urea over dosing to the cost of increased urea consumption and/or increased NH3 emissions. An Lean NOx Trap (LNT) can also be regenerated at a higher frequency to improve NOx conversion, to the cost of increased CO2 and particulate matter (PM) emissions.

Regarding emissions control, engine and after-treatment calibration is then focused on finding the best compromise in terms of NOx, PM, CO2 and urea consumption, that will meet emission legislation on all valid random driving styles, covering all extremes from mild driving styles generating low NOx to aggressive driving styles generating high NOx.

Different approaches are taken to meet NOx emission limits under this wide range of extreme driving conditions.

In the worst case approach, the emission limits are met under all theoretical driving styles, by increased EGR, and using an oversized after-treatment system for NOx conversion and PM management, SCR thermal management, over-regenerated LNT. This however provides significant CO2 penalty (and H/W cost).

In a more pragmatic approach, the emission limits are met under all reasonable/average driving styles by the means listed above but not pushed to their limit. While this approach greatly limits the CO2 penalty, it also takes some legal risks, since it does not cover all theoretical driving styles.

Known methods of controlling an engine based on estimating pollutant emissions such as NOx are known from GB 2 531 368 and US 2017/248091.

It is an object of the invention to overcome the aforementioned drawbacks of the prior art systems and to provide an improved and more flexible methodology to reduce the emissions without undue cost, and which meets legal requirements.

### SUMMARY OF THE INVENTION

In one aspect is provided a method of controlling a vehicle engine as claimed in claim 1. Namely, a method of controlling a vehicle engine comprising a) determining at least two engine operational parameters selected from the following parameters: i) CO2 output, ii) power output iii) NOx output; b) averaging the values of said two parameters during a driving window; c) selecting reference driving conditions, collecting a number of points relating the selected engine operational parameters to populate a map of points during reference driving conditions, establishing a nominal reference curve relating said two of the following engine parameters, the reference curve being a best fit of the populated map of points which links the selected engine operational parameters; d) comparing the result from step b) with said reference curve from step c) to determine a measure of how far the parameter averages obtained from step b) are from the reference curve from step c) ; e) adjusting control of one or more engine systems dependent on the result of step d).

Said nominal reference curve may represent an averaged relationship between said two parameters under a plurality of driving conditions.

Said driving window comprises a pre-determined driving distance or a predetermined time window.

Said parameters in step a) may be NOx and CO2 outputs.

One or more of said outputs are provided from a model.

Step d) may comprise determining if said measure is more than a threshold..

Step d) may comprises determining a driving index comprising :
i) dividing the accumulated NOx during the driving window by the normal/nominal NOx that would be expected for the same accumulated CO2 output according to the reference curve, or
ii) dividing the accumulated measured CO2 during the driving window by the normal/nominal CO2 that would be expected for the same accumulated NOx output according to the reference curve.

Step e) may comprise adjusting the control of one or more engine systems comprises, dependent on step d) adjusting one or more of the following:
i) Urea /Ad Blue dosage in an SCR systems, ii) lean NOx trap regeneration frequency, iii) EGR rate, iv) injection timing and v) boost pressure.

### BRIEF DESCRIPTION OF THE DRAWINGS

The present invention is now described by way of example with reference to the accompanying drawings in which:
- Figure 1 shows a number of points relating NOx output against CO2 output at varying output and for a number of driving styles;
- Figure 2 shows a standard reference curve of figure 2 in more detail;
- Figure 3 shows the severity index (filtered) plotted for several driving profiles
- Figure 4 shows a flowchart which gives an overview of one example

### DESCRIPTION OF THE PREFERRED EMBODIMENTS

In one aspect the severity of driving style is analysed in the engine control software and may be ranked by providing an index with regards to engine-out NOx production, and this analysis is used to then automatically adapt online the engine-out calibration and controls such that the [NOx]/ [CO2, PM, urea consumption] compromise can be shifted towards lower NOx values when required (to prevent exceeding NOx emissions limits in case of aggressive driving style).

In summary, one aspect of the invention comprise determining driving parameters relating the NOx output with respect to the power or CO2 output, (or relating the CO2 output with respect to the power or NOx output) and determining effectively how far this combined parameter is from a calibration curve or map, so as to e.g. provide a severity index. The severity index or how far the combined parameter is from the reference curve, is then used to control one or more the engine parameters (such as EGR/AdBlue/etc.) to optimize emissions reduction. The NOx and CO2 as power output may be measured or provided by models.

Determining the parameters may be performed in a time or mileage window.

### Background

With a well-balanced engine-out calibration, the energy specific NOx emissions (g of NOx per kWh or g of NOx per g of CO2) measured and averaged over a small distance follow a certain trend as long as no aggressive manoeuvers are applied from the driver.

When considering an average driving style such as WLTC (Worldwide harmonized Light vehicles Test Cycle), the NOx produced by the engine follows a trend versus the CO2 (or energy) produced by the engine. By design, the WLTC is THE average driving style meant to correspond to the average human driving style (WLTC was developed in this sense).

Some aggressive driving styles are challenging in terms of NOx production. A typical example is full load operation. At full load, the EGR rate is limited and the calibration is tuned to meet torque requirements while not producing excessive PM, which would accelerate DPF filling in the case of Diesel engines, require very frequent DPF regeneration and then increase CO2. If the driver then constantly toggles between full load and foot-off operation, the NOx production is abnormally high.

### Detailed Description of the Invention

A severity index implemented in examples is, for a given average CO2 produced or energy consumed, a measure of the ratio of averaged actual engine-out NOx emission divided by the averaged actual engine-out NOx under average/nominal driving conditions. Any average driving style data can be used to characterize the nominal EO (Engine-out emissions) NOx = f (average CO2) map which is then later used by the strategy to calculate the severity index.

The average CO2 is calculated by converting injected fuel quantity to CO2 equivalent, while the average engine-out NOx is calculated by cumulating an embedded engine-out NOx model.

### Providing a Calibration Map/Curve

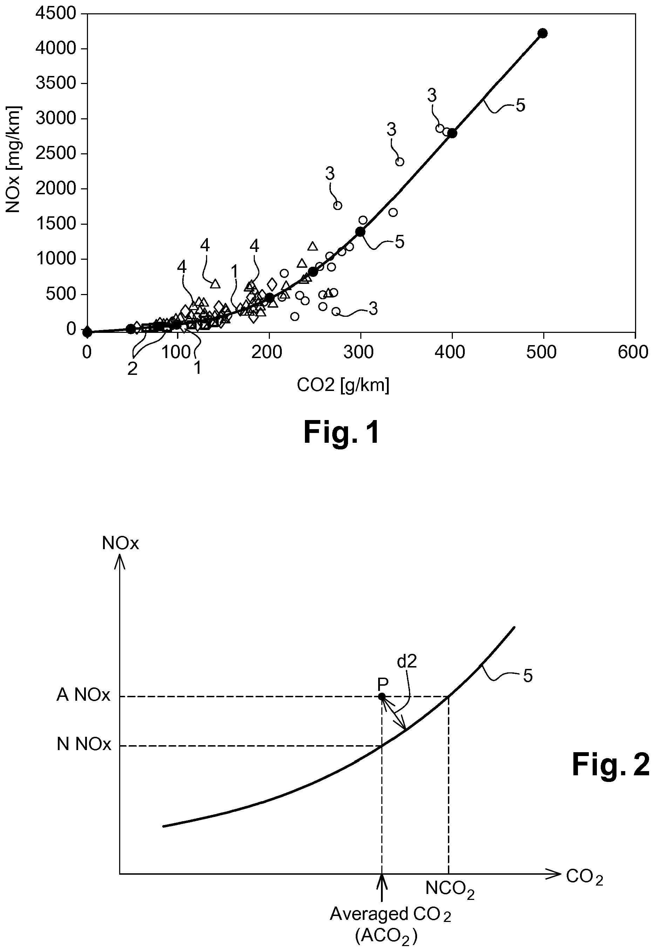

Figure 1 shows a number of points relating NOx output against CO2 output at varying output and for a number of driving styles. The driving styles are with reference numerals: WLTC without slope 1, 170832 urban no slope 2, T111 180312 with a 5% slope 3 and 170201 Artemis no slope, 4. Such driving conditions can thus provide points to populate a nominal EO NOx = f (average CO2) map, since all these driving styles are "average". The "calibration map" is then used to provide a reference curve 5 to best fit the populated map which is then used as a reference map in embodiments of the invention; e.g. to determine and compare against a current driving style so as to e.g. determine a severity index; this the figure shows a typical calibration for the nominal NOx/CO2 map.

### Determining Severity Index

A raw severity index is calculated by firstly looking at the averaged CO2 and NOx over a calibratable mileage window (typically from few hundred meters to few km). Alternatively this may be done over a time window. This provides for example a point P on the chart of figure 1, shown again in figure 2 for clarity.

It is then decided e.g. to determine a severity index, to determine generally by how far away the point is from the form the calibration/standard curve 5. This may be done by finding the shortest distance between point P and the curve, being dx. The skilled person would be aware of various ways in determining the severity index.

Alternatively and in refined embodiments, for example, standard curve 5 may be used to determine a value of normal accumulated NOx (NNOx) for the averaged CO2 determined (e.g. by the model) during the mileage window. This is then compared to the averaged actual NOx (ANOx) during the mileage window to determine a severity index. Dependent on the severity index the engine may appropriately control the aforementioned systems (EGR /AdBlue urea NH3 control) to optimize the reduction in emission.

In one aspect the severity index is determined by dividing the accumulated measured NOx (for that time/mileage window= ANOx) by the normal/nominal NOx (NNOx) that would be expected for the same accumulated CO2 output according to calibration curve 5.

Alternatively standard curve 5 may be used to determine a value of normal accumulated CO2 (NCO2) for the averaged NOx determined (e.g. by the model) during the mileage window. This is then compared to the averaged actual CO2 (ACO2) during the mileage window to determine a severity index.

In one aspect the severity index is determined by dividing the accumulated measured NOx (for that time/mileage window) by the normal/nominal NOx that would be expected for the same accumulated CO2 output according to calibration curve 5.

It should be noted that the severity index may be inherently determined simply by comparing the averaged actual NOx with the normally accumulated NOx for that CO2s output, or by determining comparing the averaged actual CO2 with the normally accumulated CO2 for that NOx output. So in one aspect such a comparison is made and if the difference between values is greater than a threshold, the engine controls the aforementioned systems appropriately. Thus the severity index may be simply be a "yes" or "no" on whether the appropriate parameters vary by more than a threshold.

This raw index can still vary significantly during random driving conditions and the global driving style severity cannot be judged over only few kilometers. That is why the raw severity is preferably further filtered by a first order filter calculated every time the severity is calculated (for example every km).

### Results

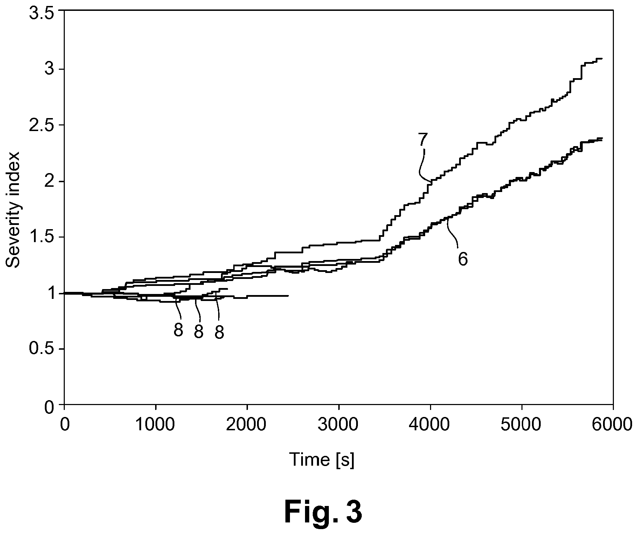

Figure 3 shows the severity index (filtered) plotted for several driving profiles. The severe driving profiles 10 are clearly identified by higher values (>>1.5) than nominal driving styles (<1.5) such as WLTC with or without slope, Artemis, or RDE. The severe driving profiles driven in this example include many foot-on / foot-off operation from the driver, which explains abnormal (=much higher than mild/average driving) NOx production. In the figure reference numerals 7 denotes RDE severe with slope, and 6 denotes RDE sever no slope. Less severe driving styles such as WLTC, RDE mild urban Artemis and RTS95 are shown designated with grouped reference numeral 8

### Applying Appropriate Control dependent on Severity Index

Figure 3 shows that e.g. EGR rate should increase with higher severity index. Thus generally the severity index is used in calibration to apply appropriate control (compromise) when an aggressive driving style is detected.

In one example this may be allowing a temporary increase of PM (and CO2), allowing engine-out NOx to be reduced.

In one aspect there is an automatic online modification of EGR rate demands as a function of the severity index: this may be appied also on the base EGR rate demand and minimum EGR rate which is applied even when operating at the smoke limit. So in one example the EGR rate is increased depending on the severity index value. A nominal EGR rate is calibrated, considering a "normal" driving. This EGR rate gives the best compromise in terms of NOx / PM / CO2. Another EGR rate is calibrated, for a severe driving in order to reduce the engine-out NOx. This high EGR may affect the drivability or fuel consumption but is required to contain NOx emissions. The actual EGR rate applied may be e.g. interpolated between those two extreme cases depending on the calculated severity index described above.

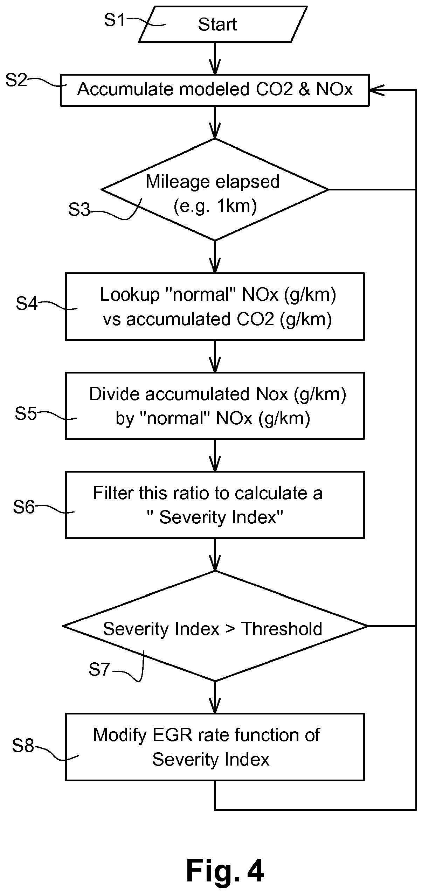

Figure 4 shows a flowchart which gives an overview of one example and how severity index calculation is used for EGR rate adaption. The flowchart is simplified compared to the control strategy, the EGR rate modification is not detailed.

The process starts at step S1. At step 2 the accumulated levels of CO2 and NOx are determined. These may be provided from models and this step may be performed over any appropriate time or mileage window. Where the methodology is performed over set mileage windows in step S3 it is determined whether the appropriate miles has elapsed. If so in step S4 the normal NOx output level for the CO2 accumulated level determined in step S2 is calculated. The accumulated NOx determined in step S2 is then divided by the normal NOx output level in step S5 to determine a raw severity index. In optional step S6 the result of step S5 is filtered to determine a (working) severity index. In step S7 it is determined if the severity index from step S7 is above a threshold and at step S8 if so the EGR rate is modified as a function of the severity index.

This calculated NOx severity index can also be used to act on any other parameter which can affect NOx emissions. The EGR rate modification has been implemented but the severity index variable can also be used to increase AdBlue injection on an SCR system or adapt Lean NOx Trap regenerations frequency.

The core of this invention is the calculation of a "NOx severity index" and its usage to influence the NOx production of the engine. It would have been possible to implement a simple NOx accumulator to estimate online NOx emissions (in mg/km), however this calculation would be much more dependent on the driving cycle and driving conditions (road slope for example) and not only on the driving style.

## Claims

1. A method of controlling a vehicle engine comprising
a) determining at least two engine operational parameters selected from the following parameters: i) CO2 output, ii) power output iii) NOx output;
b) averaging the values of said two parameters during a driving window;
c) selecting reference driving conditions, collecting a number of points relating the selected engine operational parameters to populate a map of points during reference driving conditions, establishing a nominal reference curve relating said two of the following engine parameters, the reference curve being a best fit of the populated map of points which links the selected engine operational parameters;
d) comparing the result from step b) with said reference curve from step c) to determine a
measure of how far the parameter averages obtained from step b) are from the reference curve from step c);
e) adjusting control of one or more engine systems dependent on the result of step d).

2. A method as claimed in claim 1 wherein said nominal reference curve represents an averaged relationship between said two parameters under a plurality of driving conditions.

3. A method as claimed in claim 1 to 2 wherein said driving window comprises a pre-determined driving distance or a predetermined time window.

4. A method as claimed in claims 1 to 3 wherein said parameters in step a) are NOx and CO2 outputs.

5. A method as claimed in claims 1 to 4 wherein one or more of said outputs are provided from a model.

6. A method as claimed in claims 1 to 5 wherein step d) comprises determining if said measure is more than a threshold.

7. A method as claimed in claims 1 to 6 wherein step d) comprises determining a driving index comprising:
i) dividing the accumulated NOx during the driving window by the normal/nominal NOx that would be expected for the same accumulated CO2 output according to the reference curve, or
ii) dividing the accumulated measured CO2 during the driving window by the normal/nominal CO2 that would be expected for the same accumulated NOx output according to the reference curve.

8. A method as claimed in claims 1 to 7 wherein in step e) comprises adjusting control of one or more engine systems comprises, dependent on step d) adjusting one or more of the following:
i) Urea /Ad Blue dosage in an SCR systems, ii) lean NOx trap regeneration frequency, iii) EGR rate, iv) injection timing and v) boost pressure.

## Patentansprüche

1. Verfahren zur Steuerung eines Fahrzeugmotors, welches umfasst:
a) Bestimmen von mindestens zwei Motorbetriebsparametern, die aus den folgenden Parametern ausgewählt sind: i) CO2-Emission, ii) Leistungsabgabe, iii) NOx-Emission;
b) Mittelwertbildung der Werte der beiden Parameter während eines Fahrfensters;
c) Auswählen von Referenzfahrbedingungen, Sammeln einer Anzahl von Punkten, die sich auf die ausgewählten Motorbetriebsparameter beziehen, um eine Karte von Punkten während der Referenzfahrbedingungen zu bestücken, Erstellen einer nominalen Referenzkurve, die die beiden der folgenden Motorparameter in Bezug setzen, wobei die Referenzkurve eine beste Anpassung der bestückten Karte von Punkten ist, die die ausgewählten Motorbetriebsparameter verknüpft;
d) Vergleichen des Ergebnisses aus Schritt b) mit der Referenzkurve aus Schritt c), um ein Maß dafür zu bestimmen, wie weit die aus Schritt b) erhaltenen Parameter-Mittelwerte von der Referenzkurve aus Schritt c) entfernt sind;
e) Einstellen der Steuerung eines oder mehrerer Motorsysteme in Abhängigkeit von dem Ergebnis von Schritt d).

2. Verfahren nach Anspruch 1, wobei die nominale Referenzkurve eine gemittelte Beziehung zwischen den beiden Parametern unter einer Vielzahl von Fahrbedingungen darstellt.

3. Verfahren nach einem der Ansprüche 1 bis 2, wobei das Fahrfenster eine vorbestimmte Fahrstrecke oder ein vorbestimmtes Zeitfenster umfasst.

4. Verfahren nach einem der Ansprüche 1 bis 3, wobei die Parameter in Schritt a) NOx- und CO2-Emissionen sind.

5. Verfahren nach einem der Ansprüche 1 bis 4, wobei einer oder mehrere der Emissionen von einem Modell bereitgestellt werden.

6. Verfahren nach einem der Ansprüche 1 bis 5, wobei Schritt d) das Bestimmen umfasst, ob das Maß größer als ein Schwellenwert ist.

7. Verfahren nach einem der Ansprüche 1 bis 6, wobei Schritt d) die Bestimmung eines Fahrindexes umfasst, der Folgendes umfasst:
i) Dividieren des akkumulierten NOx während des Fahrfensters durch das normale/nominale NOx, das für die gleiche akkumulierte CO2-Emission gemäß der Referenzkurve zu erwarten wäre, oder
ii) Dividieren des akkumulierten gemessenen CO2 während des Fahrfensters durch das normale/normale CO2, das für die gleiche akkumulierte NOx-Emission gemäß der Referenzkurve zu erwarten wäre.

8. Verfahren nach einem der Ansprüche 1 bis 7, wobei in Schritt e) das Einstellen der Steuerung eines oder mehrerer Motorsysteme in Abhängigkeit von Schritt d) das Einstellen eines oder mehrerer der folgenden Systeme umfasst:
i) Harnstoff-/Ad-Blue-Dosierung in einem SCR-System, ii) Regenerationshäufigkeit des Speicherkatalysators, iii) AGR-Rate, iv) Einspritzzeitpunkt und v) Ladedruck.

## Revendications

1. Procédé de contrôle d'un moteur de véhicule comprenant :
a) la détermination d'au moins deux paramètres opérationnels de moteur sélectionnés parmi les paramètres suivants : i) la sortie de CO2, ii) la sortie de puissance et iii) la sortie de NOx ;
b) le calcul de la moyenne des valeurs desdits deux paramètres pendant une fenêtre de conduite ;
c) la sélection de conditions de conduite de référence, la collecte d'un nombre de points se rapportant aux paramètres opérationnels de moteur sélectionnés pour peupler une carte de points pendant les conditions de conduite de référence, l'établissement d'une courbe de référence nominale mettant en relation lesdits deux des paramètres de moteur suivants, la courbe de référence étant un meilleur ajustement de la carte de points peuplée qui lie les paramètres opérationnels de moteur sélectionnés ;
d) la comparaison du résultat issu de l'étape b) avec ladite courbe de référence issue de l'étape c) pour déterminer une mesure de l'éloignement des moyennes de paramètres obtenues à partir de l'étape b) par rapport à la courbe de référence issue de l'étape c) ; et
e) le réglage de la commande d'un ou de plusieurs systèmes de moteur en fonction du résultat de l'étape d).

2. Procédé tel que revendiqué selon la revendication 1, dans lequel ladite courbe de référence nominale représente une relation moyennée entre lesdits deux paramètres sous une pluralité de conditions de conduite.

3. Procédé tel que revendiqué selon les revendications 1 et 2, dans lequel ladite fenêtre de conduite comprend une distance de conduite prédéterminée ou une fenêtre temporelle prédéterminée.

4. Procédé tel que revendiqué selon les revendications 1 à 3, dans lequel lesdits paramètres de l'étape a) sont des sorties de NOx et de CO2.

5. Procédé tel que revendiqué selon les revendications 1 à 4, dans lequel une ou plusieurs desdites sorties sont fournies à partir d'un modèle.

6. Procédé tel que revendiqué selon les revendications 1 à 5, dans lequel l'étape d) comprend la détermination de si ladite mesure est supérieure à un seuil.

7. Procédé tel que revendiqué selon les revendications 1 à 6, dans lequel l'étape d) comprend la détermination d'un indice de conduite comprenant :
i) la division du NOx accumulé pendant la fenêtre de conduite par le NOx normal/nominal qui devrait être attendu pour la même sortie de CO2 accumulé conformément à la courbe de référence, ou
ii) la division du CO2 mesuré accumulé pendant la fenêtre de conduite par le CO2 normal/nominal qui devrait être attendu pour la même sortie de NOx accumulé conformément à la courbe de référence.

8. Procédé tel que revendiqué selon les revendications 1 à 7, dans lequel l'étape e) qui comprend le réglage de la commande d'un ou de plusieurs systèmes de moteur comprend, en fonction de l'étape d), le réglage d'un ou de plusieurs des paramètres suivants :
i) le dosage d'urée/d'Ad Blue dans un système SCR, ii) la fréquence de régénération du piège à NOx pauvre, iii) le taux d'EGR, iv) le cadencement d'injection et v) la pression de suralimentation.
